# EUROPÄISCHE PATENTSCHRIFT

(11) **EP 3 526 497 B1**
(45) Veröffentlichungstag und Bekanntmachung des Hinweises auf die Patenterteilung: **26.08.2020**
(21) Anmeldenummer: 17791300.1
(22) Anmeldetag: 11.10.2017
(51) Int. Cl.: F16J 15/328, B23P 19/04

(54) **VERFAHREN ZUR HERRICHTUNG VON STRANGMATERIAL FÜR DIE VERARBEITUNG ZU DICHTUNGEN UND STRANGMATERIAL**
METHOD FOR PREPARING EXTRUDED MATERIAL FOR PROCESSING TO FORM SEALINGS AND EXTRUDED MATERIAL
PROCÉDÉ POUR PRODUIRE UN MATÉRIAU EN BANDE CONTINUE DESTINÉ À LA RÉALISATION DE JOINTS D'ÉTANCHÉITÉ ET BANDE CONTINUE

(30) Priorität: 13.10.2016 DE 102016119520
(43) Veröffentlichungstag der Anmeldung: 21.08.2019
(73) Patentinhaber: CQLT SaarGummi Technologies S.à.r.l., 5544 Remich (LU); BMW AG, 80809 München (DE); AyTec Automation GmbH, 93098 Mintraching (DE)
(72) Erfinder: KAST, Christian, 66683 Merzig-Brotdorf (DE); HINZ, Andreas, 82140 Olching (DE); RUHLAND, Christian, 93161 Sinzing (DE)
(74) Vertreter: Patentanwälte Bernhardt / Wolff Partnerschaft mbB
(86) Internationale Anmeldenummer: PCT/EP2017/075889
(87) Internationale Veröffentlichungsnummer: WO 2018/069371

(56) Entgegenhaltungen:
- EP-A1- 1 733 839
- WO-A1-2013/167257
- DE-A1-102014 110 541

## Beschreibung

Die Erfindung betrifft ein Verfahren zur Herrichtung von Strangmaterial für die Verarbeitung zu Dichtungen oder/und Kantenschutzleisten an Fahrzeugkarosserien, wobei das herzurichtende, im Wesentlichen aus Elastomerwerkstoff bestehende Strangmaterial einen sich in seiner Länge in Stranglängsrichtung erstreckenden, eine Klebeschicht schützenden Abdeckstreifen aufweist, der aus an Stoßenden miteinander verbundenen Teilstücken besteht.

Die Bildung von Dichtungen oder Kantenschutzleisten an Fahrzeugkarosserien, insbesondere an Fahrzeugtüren, aus endlos zugeführtem solchen Strangmaterial ist in EP 1 733839 A1 und DE 10 2014 110 541 A1 beschrieben. Im Zuge der Verarbeitung des Strangmaterials ist der Abdeckstreifen, der an den Stoßverbindungen zwischen den Teilstücken jeweils mit einer die Stoßenden überlappenden Verbindungslasche versehen ist, zur Freilegung der Klebeschicht von dem übrigen Strangmaterial abzuziehen, wobei große erforderliche Abzugskräfte, insbesondere in ihrer Größe schwankende Abzugskräfte, sehr hinderlich sind.

Der Erfindung liegt die Aufgabe zugrunde, ein neues Verfahren zur Herrichtung von Strangmaterial der oben beschriebenen Art anzugeben, bei dem die Größe erforderlicher Abzugskräfte und/oder bei dem die Schwankungsbreite der Abzugskräfte reduziert ist.

Das erfindungsgemäße Verfahren ist dadurch gekennzeichnet, dass der Abdeckstreifen von der Klebeschicht gelöst und wieder mit der Klebeschicht verbunden wird.

Durch Loslösung und Wiederverbindung des Abdeckstreifens mit der Klebeschicht lassen sich vor allem im Bereich der Stoßstelle auftretende Änderungen der Abzugskraft deutlich vermindern.

In einer besonders bevorzugten Ausführungsform der Erfindung wird der Abdeckstreifen unter Versatz in Stranglängsrichtung wieder mit der Klebeschicht verbunden, wobei die Stoßenden der Teilstücke des Abdeckstreifens versetzt zu ihrer ursprünglichen Lage auf der Klebeschicht zur Anordnung kommen.

Gegebenenfalls sind die Stoßenden der Teilstücke des Abdeckstreifens vor dessen Versatz auf der Klebeschicht deckungsgleich mit Stoßenden von Teilstücken des gesamten Strangmaterials oder nur mit Stoßenden von Teilstücken eines die Klebeschicht bildenden, doppeltklebenden Klebebandes.

In jedem Fall führt der erfindungsgemäße Versatz der Stoßenden von Teilstücken des Abdeckstreifens, insbesondere zu Stoßenden des übrigen Strangmaterials, zur Reduktion an Verbindungsstellen auftretender Maxima der Abzugskraft. Solche Maxima treten herkömmlich dadurch auf, dass an den Verbindungsstellen eingesetztes Klebermaterial gesonderte Verbindungselemente zwischen den Teilstücken des Abdeckstreifens benetzt und das Klebermaterial ggf. zwischen den Abdeckstreifen und die Klebeschicht gelangt. Durch den erfindungsgemäßen Versatz kann Klebermaterial nur bis an die ununterbrochene, der Klebefläche zugewandte Innenseite des Abdeckstreifens heranreichen, die eine die Klebehaftung begrenzende, die im Normalfall leichte Abziehbarkeit sichernde Beschichtung aufweist.

In einer weiteren bevorzugten Ausführungsform der Erfindung wird der Abdeckstreifen an einer in Stranglängsrichtung fortlaufenden Ablösestelle gelöst und im Abstand (L) zu der Ablösestelle an einer Verbindungsstelle wieder mit der Klebeschicht verbunden, wobei der jeweils gelöste Abschnitt des Abdeckstreifens länger als der Abstand (L) ist. Dadurch ergibt sich ein Versatz, der der Differenz zwischen der Länge des gelösten Abschnitts und dem Abstand zwischen der Ablösestelle und der Verbindungsstelle entspricht. Alternativ könnte ein fortlaufend vom Abdeckstreifen gelöster Abschnitt des übrigen Strangmaterials eine die Länge (L) übersteigende Länge aufweisen und dieser Strangmaterialabschnitt von dem Abdeckstreifen entsprechend weggeführt sein.

Vorzugsweise wird zur Ablösung des Abdeckstreifens das Strangmaterial in Stranglängsrichtung relativ zu einer stationären Versatzeinrichtung bewegt.

Der Abdeckstreifen kann bei der Ablösung an einer Ablösestelle durch eine Führungsrolle und an einer Wiederverbindungsstelle durch eine Andruckrolle auf die Klebeschicht aufgebracht werden, während ein fortlaufend von der Klebeschicht gelöster Abschnitt des Abdeckstreifens über wenigstens eine im Abstand zu der Klebeschicht angeordnete Umlenkrolle geführt wird. Anstelle der genannten Rollen könnten Führungseinrichtungen vorgesehen sein, auf denen der Abdeckstreifen gleitet. Insbesondere zur Ablösung des Abdeckstreifens käme eine keilförmige Führungseinrichtung in Betracht.

Alternativ zur Herrichtung des Strangmaterials im Zuge seiner Herstellung könnte die Herrichtung des Strangmaterials auch erst beim Automobilhersteller erfolgen und das Strangmaterial danach unmittelbar dem Verarbeitungsprozess zugeführt werden.

Bei der Klebeschicht kann es sich um die karosserieseitige Klebeschicht eines beidseitig klebenden Klebebandes handeln. Möglich wäre aber auch eine Verbindung der Klebeschicht unmittelbar mit dem Elastomerwerkstoff des Strangmaterials.

In weiterer Ausgestaltung der Erfindung kann der Abdeckstreifen mit der Klebeschicht in gestauchtem oder gedehntem Zustand wiederverbunden werden, ggf. abschnittsweise gestaucht und abschnittsweise gedehnt.

Dehnung oder Stauchung des Abdeckstreifens beim Wiederauflegen auf die Klebeschicht ist vor allem erforderlich, wenn der Abdeckstreifen bereits vor der Ablösung von der Klebeschicht mit dieser in gedehntem oder gestauchtem Zustand verbunden war.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: einen Strangmaterialabschnitt vor und nach erfindungsgemäßer Herrichtung,
- Fig. 2: eine Detaildarstellung des Strangmaterials vor der erfindungsgemäßen Herrichtung,
- Fig. 3 und 4: schematische Ansichten von Einrichtungen zur erfindungsgemäßen Herrichtung von Strangmaterial,
- Fig. 5: eine die Wirkungsweise der Erfindung erläuternde Darstellung, und
- Fig. 6 und 7: weitere Einrichtungen zur erfindungsgemäßen Herrichtung von Strangmaterial.

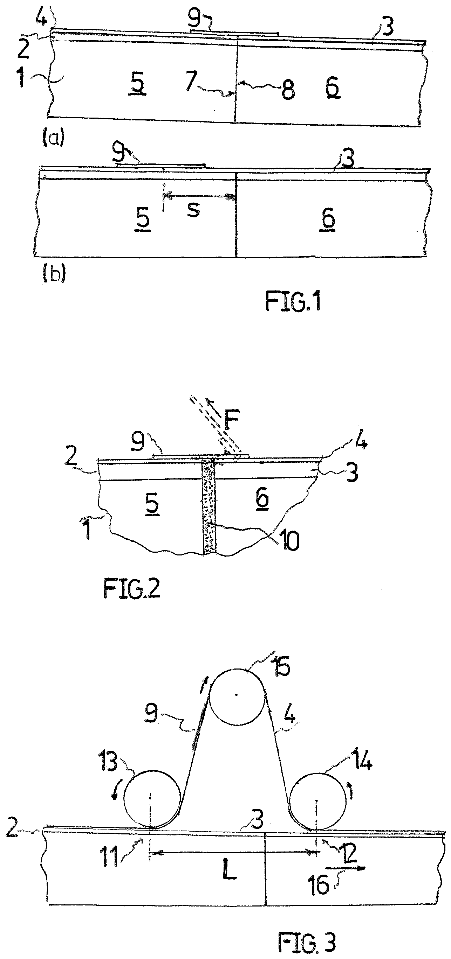

In Fig. 1 gezeigtes Strangmaterial dient zur Bildung von Dichtungen oder/und Kantenschutzleisten an Fahrzeugkarosserien, wobei das Strangmaterial beim Verarbeitungsprozess im Zuge der Fahrzeugmontage laufend zugeführt und jeweils eine Dichtung oder/und Kantenschutzleiste bildende Endstücke dem Montagetakt entsprechend abgetrennt werden.

Im Querschnitt betrachtet umfasst das Strangmaterial einen extrudierten Abschnitt 1 aus Elastomerwerkstoff. Der Abschnitt 1 weist ein der Dicht- oder/und Kantenschutzfunktion entsprechendes Querschnittsprofil auf und ist mit einem sich in seiner Länge in Stranglängsrichtung erstreckenden, beidseitig klebenden Klebeband 2 verbunden. Eine dem Abschnitt 1 aus Elastomerwerkstoff abgewandte Klebeschicht 3 des beidseitig klebenden Klebebandes 2 schützt ein Abdeckstreifen 4, der im Zuge der Verarbeitung des Strangmaterials zu Dichtungen oder/und Kantenschutzleisten unter Freigabe der Klebeschicht 3 zu entfernen ist.

Das Strangmaterial umfasst Teilstücke, von denen in dem in Fig. 1 gezeigten Strangmaterialausschnitt zwei Teilstücke 5 und 6 an Enden 7 und 8 aneinanderstoßen. Solche Teilstücke ergeben sich z.B. dadurch, dass in einem ersten Herrichtungsschritt extrudiertes und laufend mit Klebeband 2 verbundenes Elastomerstrangmaterial auf fehlerhafte Strangteile untersucht wird, solche Strangteile herausgetrennt und fehlerfreie Teilstücke an Enden miteinander verbunden werden.

Stoßenden zwischen Teilstücken des Abdeckstreifens können ferner auch daher rühren, dass das beidseitig klebende Klebeband von vornherein selbst aus an Stoßenden miteinander verbundenen Teilstücken zusammengesetzt ist. Eine dritte Möglichkeit besteht darin, dass nur der Abdeckstreifen eines beidseitig klebenden Klebebandes von vornherein an Stoßenden miteinander verbundene Teilstücke aufweist.

Zur Verbindung der Strangteilstücke werden die aneinanderstoßenden Trennschnittflächen miteinander verbunden, vorzugsweise verklebt. Die Trennstelle zwischen den Abdeckstreifen der verbundenen Teilstücke wird zusätzlich mit einer die Streifenenden überlappenden Verbindungslasche 9 versehen. Die Verklebung der Trennschnittflächen erfolgt vorzugsweise in einem Heißklebeprozess, bei dem eine zwischen den Trennschnittflächen angeordnete Folie zum Schmelzen gebracht wird.

Dem genannten ersten Herrichtungsschritt, bei dem Strangmaterial gemäß Fig. 1a entsteht, folgt ein weiterer Herrichtungsschritt unter Bildung von Strangmaterial gemäß Fig. 1b. Der Abdeckstreifen 4 wird in diesem Schritt von dem übrigen Strangmaterial abgelöst und mit dem übrigen Strangmaterial versetzt um die Strecke S wieder verbunden.

Insbesondere durch den Versatz sind große Werte der Ablösekraft für den Abdeckstreifen, insbesondere hohe Spitzenwerte, reduziert, die ohne den beschriebenen Herrichtungsschritt beim Lösen des Abdeckstreifens 4 im Zuge der Verarbeitung des Strangmaterials aufzubringen wären.

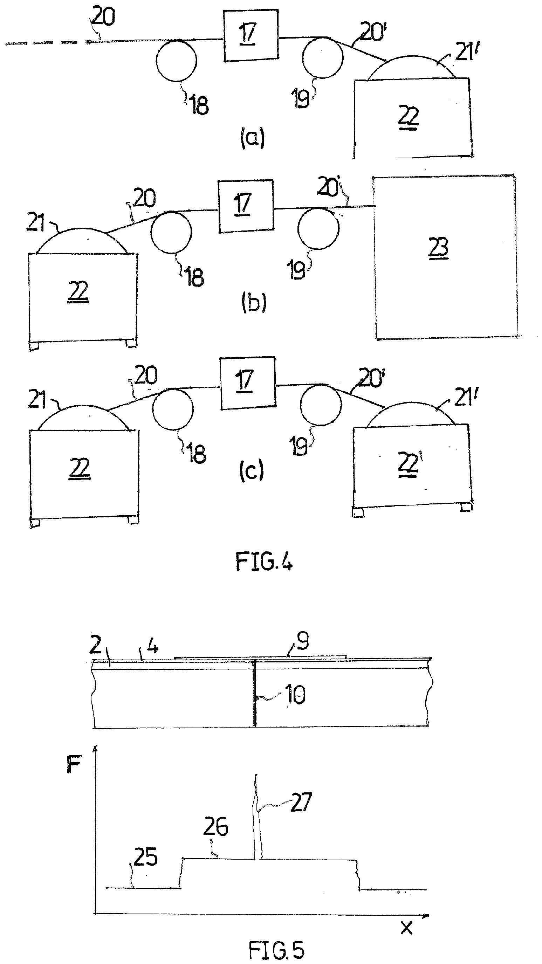

Wie Fig. 2 in Verbindung mit Fig. 5 erkennen lässt, ergäben sich an den Verbindungsstellen Veränderungen der Abzugskraft F, indem dort z.B. Heißklebermaterial 10 durch die Schnittöffnung in dem Abdeckstreifen 4 hindurch bis an die Klebelasche 9 heranreicht und darüber hinaus zwischen dem Abdeckstreifen 4 und der Klebeschicht 3 seitlich eindringen kann. Gemäß Fig. 5 steigt die Abzugskraft F gegenüber einem Normalniveau 25 auf ein Niveau 26 an, wenn die Abzugsstrecke x des Abdeckstreifens 4 die Verbindungslasche 9 erreicht. Die Ursache hierfür liegt darin, dass durch Verschweißung der Verbindungslasche 9 mit den Enden des Abdeckstreifens 4 eine Verfestigung der Klebeverbindung zwischen dem Abdeckstreifen 4 und dem beidseitig klebenden Klebeband 2 bewirkt wird. An der Stoßstelle kommt es zu einem scharfen Maximum 27 der Abzugskraft F, hauptsächlich infolge Verklebung der Verbindungslasche 9 mit dem Klebermaterial 10. Allein durch Ablösen des Abdeckstreifens 4 und erneutes Verkleben mit der betreffenden Klebeschicht des beidseitig klebenden Klebebandes 2 lassen sich das Kraftniveau 26 und die Höhe des Maximums 27 verringern. Letztere verringert sich noch deutlich weiter, wenn der Abdeckstreifen 4 gegenüber seiner vorherigen Position in Stranglängsrichtung versetzt wieder verbunden wird.

Durch die weitere Herrichtung des Strangmaterials unter Versatz des Abdeckstreifens 4 reicht das Klebematerial 10 jeweils nur bis an den an der betreffenden Stelle nun geschlossenen Abdeckstreifen 4 heran, dessen der Klebeschicht 3 zugewandte Oberfläche üblicherweise eine die Haftung herabsetzende Beschichtung aufweist.

Indem der Versatz des Abdeckstreifens 4 erst nach vollständiger Aushärtung des Klebermaterials 10 erfolgt, ist auch ein Eindringen von Klebermaterial 10 zwischen dem Abdeckstreifen 4 und der Klebeschicht 3 weitgehend vermieden.

Die weitere Herrichtung des Strangmaterials unter Ablösung des Abdeckstreifens 4 und dessen Wiederverbindung mit dem übrigen Strangmaterial kann gemäß Fig. 3 in einem Arbeitsgang erfolgen, bei dem in Stranglängsrichtung fortlaufend ein Abschnitt des Abdeckstreifens 4 von dem übrigen Strangmaterial gelöst und damit wieder verbunden wird. Es kommt zum Versatz, indem die jeweils abgelöste Länge des Abdeckstreifens 4 größer als die Entfernung L in Stranglängsrichtung zwischen der jeweiligen Ablösestelle 11 und der Stelle 12 der Wiederverbindung ist.

Gemäß Fig. 3 kann eine Versatzeinrichtung eine Führungsrolle 13 und eine Andruckrolle 14 aufweisen. Zwischen den Rollen ist im Abstand zur Klebeschicht 3 eine Umlenkrolle 15 angeordnet. Wenn das Strangmaterial gemäß Pfeil 16 durch eine (nicht gezeigte) Antriebeinrichtung bewegt wird, kommt es bei der Rolle 13 zur Ablösung des Abdeckstreifens 4 von der Klebeschicht 3, während nach Führung des abgelösten Abdeckstreifens um die Umlenkrolle 15 die Rolle 14 den Abdeckstreifen 4 wieder mit der Klebeschicht 3 verbindet. Die Stoßstelle im Abdeckstreifen 4 befindet sich nun bezogen auf die Verbindungsstelle zwischen den Teilstücken des übrigen Strangmaterials in der in Fig. 1b gezeigten Position S.

Zur Herrichtung des Strangmaterials unter Versatz des Abdeckstreifens 4 lassen sich die in Fig. 4 gezeigten Anlagen mit einer schematisch dargestellten Versatzeinrichtung 17 nutzen, wobei die Versatzeinrichtung 17 z.B. wie die in Fig. 3 gezeigte Einrichtung ausgebildet ist. Rollen 18 und 19 symbolisieren eine Transport- und Führungseinrichtung, welche der Versatzeinrichtung 17 Strangmaterial 20 zuführt und hergerichtetes Strangmaterial 20' von der Versatzeinrichtung abführt.

Gemäß Fig. 4a wird Strangmaterial 20, wie es in Fig. 1a beschrieben ist, aus einem beim Hersteller des Strangmaterials durchgeführten Herrichtungsprozess zugeführt. Durch die Versatzeinrichtung 17 bearbeitetes Strangmaterial 20' gelangt auf eine Spule 21, die drehbar in einem Transportbehälter 22 gelagert ist. Der Transportbehälter mit der Spule kann zu einem Fahrzeughersteller transportiert werden, wo der Transportbehälter mit der Spule innerhalb einer Applikationsvorrichtung 23 (Fig. 4b) zur Bildung von Dichtungen oder/und Kantenschutzleiten an Fahrzeugkarosserien verwendet wird, wie dies in EP 1 733 839 A1 beschrieben ist.

Ausgehend von Strangmaterial gemäß Fig. 1a kann die Herrichtung von Strangmaterial gemäß Fig. 1b alternativ beim Fahrzeughersteller erfolgen, indem Strangmaterial 20 von einer Spule 21 abgewickelt, der Versatzeinrichtung 17 und hergerichtetes Strangmaterial 20' der obengenannten Applikationseinrichtung 23 zugeführt wird, wie dies aus Fig. 4b hervorgeht.

Schließlich könnte gemäß Fig. 4c die Versatzeinrichtung 17 zwischen zwei baugleichen Anordnungen aus einer Spule 21 bzw. 21' und einem Transportbehälter 22 bzw. 22' angeordnet werden.

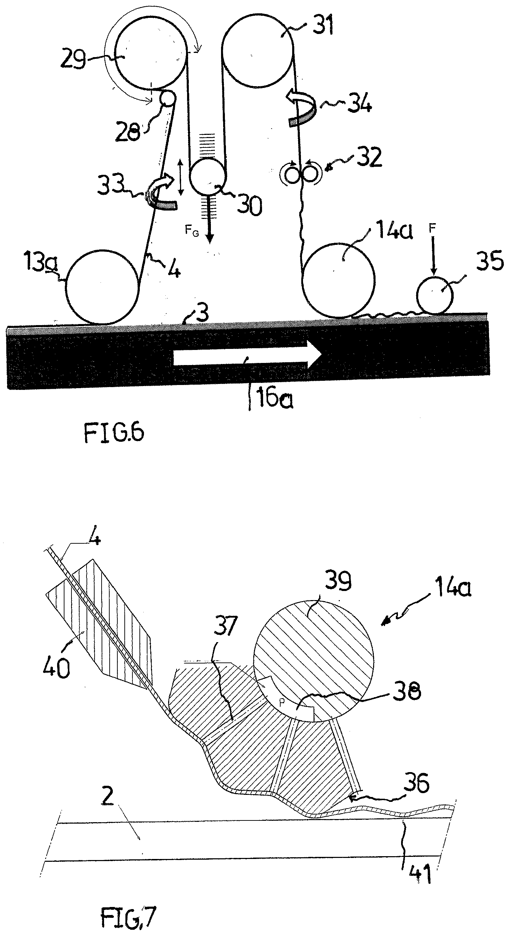

Eine in Fig. 6 gezeigte Einrichtung zur Ablösung und Wiederverbindung des Abdeckstreifens 4 mit der durch den Abdeckstreifen 4 geschützten Klebeschicht 3 erlaubt die Wiederverbindung des Abdeckstreifens 4 mit der Klebeschicht 3 in einem Zustand, in welchem der Abdeckstreifen 4 in seiner Längsrichtung gestaucht ist, um eine ggf. vorhandene Längenzunahme des Abdeckstreifens 4 auszugleichen.

Die Einrichtung von Fig. 6 umfasst eine Führungsrolle 13a, welche bei Bewegung des Strangmaterials gemäß Pfeil 16a den Abdeckstreifen 4 fortlaufend von der Klebeschicht 3 abführt. Der abgezogene Abdeckstreifen 4 gelangt über Umlenkrollen 28,29 sowie eine Pufferrolle 30 und über eine weitere Umlenkrolle 31 zwischen zwei an dem Abdeckstreifen 4 angreifende, sich gegenläufig drehende Förderrollen 32. Von den Förderrollen 32 gelangt der durch die Förderrollen in einen schlaffen Zustand gebrachte Abdeckstreifen 4 zu einer den Abdeckstreifen 4 wieder mit der Klebeschicht 3 verbindenden Andruckrolle 14a. Der Andruckrolle 14a ist eine weitere Andruckrolle 35 nachgeschaltet.

Durch Pfeile 33 und 34 symbolisierte Wendeleinrichtungen sorgen jeweils für eine 180° - Drehung des Abdeckstreifens 4. Durch diese Drehung ist gesichert, dass nur die der Klebeschicht 3 abgewandte Seite des Abdeckstreifens 4 mit den Rollen 28 bis 31 in Berührung kommt.

Die der Umlenkrolle 29 vorgeschaltete kleinere Umlenkrolle 28 sorgt für einen großen Umschlingungswinkel, in dem gezeigten Beispiel für etwa 270 °. Der große Umschlingungswinkel sichert, dass der Abdeckstreifen 4 durch die Führungsrolle 13a mit konstanter Kraft abgezogen wird. Insbesondere verhindert er Schlupf zwischen der Umlenkrolle 29 und dem Abdeckstreifen 4.

Die Pufferrolle 30 ist durch eine Kraft F_{g} belastet. Die Förderrollen 32 befinden sich in einer Art Gleichgewichtszustand mit der Pufferrolle 30, die in diesem Zustand eine bestimmte Höhenposition einnimmt.

Die Andruckrolle 14a ist, wie aus Fig. 7 hervorgeht, als Saugrolle ausgebildet und weist eine gewellte Mantelfläche 36 auf, in deren Wellentälern Saugkanäle 37 ausmünden, durch die der schlaffe Abdeckstreifen 4 unter Anpassung an die Mantelfläche 36 angesaugt wird. Eine (in Fig. 6 nicht gezeigte) Führung 40 richtet den schlaffen Abdeckstreifen geeignet aus. Ein zentraler Ansaugkanal 38 in einer Welle 39 der Andruckrolle 14a sorgt für einen Unterdruck in den betreffenden Saugkanälen 37.

Über die nachgeschaltete Andruckrolle 3 wird der ggf. wellenförmig aufgebrachte Abdeckstreifen 4 über einen möglichst großen Teil seiner Fläche mit der Klebeschicht 3 des Klebebandes verbunden.

Anstelle einer Wiederverbindung des Abdeckstreifens mit dem Klebeband im gestauchten Zustand des Abdeckstreifens wäre es auch möglich, die beim Ablösen unvermeidliche Dehnung des Abdeckstreifens durch Schrumpfung bewirkende Wärmebehandlung des Abdeckstreifens vor dessen Wiederverbindung mit dem Klebeband rückgängig zu machen. Zum Beispiel erfolgt hierzu ein Wärmeeintrag in den gedehnten Abdeckstreifen durch einen Heißluftstrahl.

In diesem Fall wäre der Rolle 14 von Fig. 3 eine Wärmebehandlungseinrichtung vorzuschalten, z.B. eine einen Heißluftstrahl erzeugende Wärmebehandlungseinrichtung. Alternativ könnte die Umlenkrolle 15 beheizt sein, wobei der Rolle 15 zweckmäßig eine Wendeeinrichtung vor- und nachgeschaltet wird.

Es versteht sich, dass die in Fig. 7 gezeigte Rolle 14a bei fehlender oder rückgängig gemachter Dehnung des Abdeckstreifens auch ohne die Ansaugfunktion wie die Rolle 14 von Fig. 3 einsetzbar wäre.

## Patentansprüche

1. Verfahren zur Herrichtung von Strangmaterial (20) für die Verarbeitung zu Dichtungen oder/und Kantenschutzleisten an Fahrzeugkarosserien, wobei das herzurichtende, im Wesentlichen aus Elastomerwerkstoff bestehende Strangmaterial (20) einen sich in seiner Länge in Stranglängsrichtung erstreckenden, eine Klebeschicht (3) schützenden Abdeckstreifen (4) aufweist, der aus an Stoßenden (7,8) miteinander verbundenen Teilstücken (5,6) besteht,
**dadurch gekennzeichnet,**
**dass** der Abdeckstreifen (4) von der Klebeschicht (3) gelöst und wieder mit der Klebeschicht (3) verbunden wird.

2. Verfahren nach Anspruch 1,
**dadurch gekennzeichnet,**
**dass** der Abdeckstreifen (4) unter Versatz in Stranglängsrichtung wieder mit der Klebeschicht (3) verbunden wird, wobei die Stoßenden der Teilstücke des Abdeckstreifens (4) versetzt zu ihrer ursprünglichen Lage auf der Klebeschicht (3) zur Anordnung kommen.

3. Verfahren nach Anspruch 1 oder 2,
**dadurch gekennzeichnet,**
**dass** die Stoßenden der Teilstücke des Abdeckstreifens (4) vor dessen Versatz deckungsgleich mit Stoßenden (7,8) von Teilstücken (5,6) des gesamten Strangmaterials (20) oder nur mit Stoßenden von Teilstücken eines die Klebeschicht (3) bildenden, beidseitig klebenden Klebebandes (2) sind.

4. Verfahren nach einem der Ansprüche 1 bis 3,
**dadurch gekennzeichnet,**
**dass** der Abdeckstreifen (4) an einer in Stranglängsrichtung fortlaufenden Ablösestelle (11) gelöst und im Abstand (L) zu der Ablösestelle (11) an einer Verbindungsstelle (12) wieder mit der Klebeschicht (3) verbunden wird, wobei der jeweils gelöste Abschnitt des Abdeckstreifens (4) größer als der Abstand (L) ist.

5. Verfahren nach einem der Ansprüche 1 bis 4,
**dadurch gekennzeichnet,**
**dass** das Strangmaterial (20) in Stranglängsrichtung (16) relativ zu einer stationären Versatzeinrichtung (17) bewegt wird.

6. Verfahren nach einem der Ansprüche 1 bis 5,
**dadurch gekennzeichnet,**
**dass** der Abdeckstreifen (4) an einer Ablösestelle (11) durch eine Führungsrolle (13) und an einer Verbindungsstelle (12) durch eine Andruckrolle (14) auf die Klebeschicht (3) aufgebracht wird.

7. Verfahren nach einem der Ansprüche 1 bis 6,
**dadurch gekennzeichnet,**
**dass** ein fortlaufend von der Klebeschicht gelöster Abschnitt des Abdeckstreifens (4) über wenigstens eine im Abstand zu der Klebeschicht (3) angeordnete Umlenkrolle (15) oder Gleiteinrichtung geführt wird.

8. Verfahren nach einem der Ansprüche 1 bis 7,
**dadurch gekennzeichnet,**
**dass** das Strangmaterial zur Herrichtung von einer Spule (21) abgewickelt und das hergerichtete Strangmaterial (20') unmittelbar einem Verarbeitungsprozess zugeführt wird.

9. Verfahren nach einem der Ansprüche 1 bis 8,
**dadurch gekennzeichnet,**
**dass** eine sich beim Ablösen des Abdeckstreifens (4) ergebende Längenzunahme des Abdeckstreifens (4) durch Wiederverbindung mit der Klebeschicht (3) im gestauchten Zustand des Abdeckstreifens ausgeglichen oder durch Wärmebehandlung des gedehnten Abdeckstreifens vor der Wiederverbindung mit der Klebeschicht (3) rückgängig gemacht wird.

10. Verfahren nach Anspruch 9,
**dadurch gekennzeichnet,**
**dass** eine Wärmebehandlung des gedehnten Abdeckstreifens (4) mittels eines Heißluftstrahls erfolgt.

11. Strangmaterial für die Verarbeitung zu Dichtungen oder/und Kantenschutzleisten an Fahrzeugkarosserien, wobei das im Wesentlichen aus Elastomerwerkstoff gebildete Strangmaterial einen sich in seiner Länge in Stranglängsrichtung erstreckenden Abdeckstreifen (4) zum Schutz einer Klebeschicht (3) aufweist, der aus an Stoßenden miteinander verbundenen Teilstücken besteht,
**dadurch gekennzeichnet,**
**dass** die Stoßenden der Teilstücke des Abdeckstreifens (4) versetzt zu Stoßenden miteinander verbundener Teilstücke des übrigen Strangmaterials angeordnet sind.

12. Strangmaterial nach Anspruch 11,
**dadurch gekennzeichnet,**
**dass** die Teilstücke des Abdeckstreifens (4) über Verbindungslaschen (9) verbunden sind.

13. Strangmaterial nach Anspruch 11 oder 12,
**dadurch gekennzeichnet,**
**dass** es sich bei der Klebeschicht (3) um eine der beiden Klebeschichten eines beidseitig klebenden Klebebandes (2) handelt.

14. Strangmaterial nach einem der Ansprüche 11 bis 13,
**dadurch gekennzeichnet,**
**dass** der Abdeckstreifen (4) gestaucht oder nach Dehnung geschrumpft mit der Klebeschicht (3) wieder verbunden ist, ggf. abschnittsweise gestaucht oder/und geschrumpft ist.

## Claims

1. Method for preparing extruded material (20) for processing to form sealings and/or edge protection strips on vehicle bodies, wherein the extruded material (20) to be prepared, which is composed substantially of elastomeric material, has a cover strip (4) which in terms of the length thereof extends in the longitudinal direction of the extruded material and which protects an adhesive layer (3) and is composed of segments (5, 6) which are connected to one another at abutment ends (7, 8), **characterized in that**
the cover strip (4) is released from the adhesive layer (3) and is re-connected to the adhesive layer (3).

2. Method according to Claim 1,
**characterized in that**
the cover strip (4) is re-connected to the adhesive layer (3) by way of an offset in the longitudinal direction of the extruded material, wherein the abutment ends of the segments of the cover strip (4) are disposed so as to be offset in relation to the original position of said abutment ends on the adhesive layer (3).

3. Method according to Claim 1 or 2,
**characterized in that**
the abutment ends of the segments of the cover strip (4) prior to offsetting the latter are congruent with abutment ends (7, 8) of segments (5, 6) of the entire extruded material (20), or only with abutment ends of segments of a double-sided adhesive tape (2) that forms the adhesive layer (3).

4. Method according to one of Claims 1 to 3,
**characterized in that**
the cover strip (4) is released at a release location (11) that is continuous in the longitudinal direction of the extruded material, and is re-connected to the adhesive layer (3) at a connection location (12) at a spacing (L) from the release location (11), wherein the respectively released portion of the cover strip (4) is larger than the spacing (L).

5. Method according to one of Claims 1 to 4,
**characterized in that**
the extruded material (20) is moved in the longitudinal direction of the extruded material (16) in a manner relative to a stationary offsetting installation (17).

6. Method according to one of Claims 1 to 5,
**characterized in that**
the cover strip (4) is applied to the adhesive layer (3) at a release location (11) by a guide roller (13) and at a connection location (12) by a contact pressure roller (14) .

7. Method according to one of Claims 1 to 6,
**characterized in that**
a portion of the cover strip (4) that is continuously released from the adhesive layer is guided by way of at least one deflection roller (15) or sliding installation that is disposed so as to be spaced apart from the adhesive layer (3).

8. Method according to one of Claims 1 to 7,
**characterized in that**
the extruded material for preparing is unwound from a spool (21) and the prepared extruded material (20') is fed directly to a processing process.

9. Method according to one of Claims 1 to 8,
**characterized in that**
a length increase of the cover strip (4) arising when releasing the cover strip (4) is equalized by reconnecting to the adhesive layer (3) in the length-compressed state of the cover strip, or else is reversed by heat-treating the elongated cover strip prior to the re-connection to the adhesive layer (3).

10. Method according to Claim 9,
**characterized in that**
a heat treatment of the elongated cover strip (4) is performed by means of a hot-air jet.

11. Extruded material for processing to form sealings and/or edge protection strips on vehicle bodies, wherein the extruded material that is formed substantially of elastomeric material for the protection of an adhesive layer (3) has a cover strip (4) which in terms of the length thereof extends in the longitudinal direction of the extruded material and which is composed of segments that are connected to one another at abutment ends, **characterized in that**
the abutment ends of the segments of the cover strip (4) are disposed so as to be offset in relation to abutment ends of mutually connected segments of the remaining extruded material.

12. Extruded material according to Claim 11,
**characterized in that**
the segments of the cover strip (4) are connected by way of connection tabs (9).

13. Extruded material according to Claim 11 or 12,
**characterized in that**
the adhesive layer (3) is one of the two adhesive layers of a double-sided adhesive tape (2).

14. Extruded material according to one of Claims 11 to 13,
**characterized in that**
the cover strip (4) so as to be length-compressed or shrunk after elongation is re-connected to the adhesive layer (3), optionally so as to be length-compressed and/or shrunk in portions.

## Revendications

1. Procédé pour la réalisation d'un matériau en bande continue (20) pour la transformation en joints d'étanchéité et/ou en listeaux de protection de bord sur des carrosseries de véhicule, le matériau en bande continue (20) à réaliser, essentiellement constitué de matériau élastomère, présentant un ruban de recouvrement (4) s'étendant dans sa longueur dans la direction longitudinale de la bande continue, protégeant une couche adhésive (3), lequel ruban de recouvrement est constitué de morceaux (5, 6) assemblés les uns aux autres au niveau des abouts (7, 8), **caractérisé en ce que** le ruban de recouvrement (4) est détaché de la couche adhésive (3) puis réassemblé avec la couche adhésive (3).

2. Procédé selon la revendication 1, **caractérisé en ce que** le ruban de recouvrement (4) est réassemblé avec la couche adhésive (3) avec un décalage dans la direction longitudinale de la bande continue, les abouts des morceaux du ruban de recouvrement (4) étant disposés de manière décalée par rapport à leur position initiale sur la couche adhésive (3).

3. Procédé selon la revendication 1 ou 2, **caractérisé en ce que** les abouts des morceaux du ruban de recouvrement (4), avant leur décalage, coïncident avec des abouts (7, 8) de morceaux (5, 6) de l'ensemble du matériau en bande continue (20) ou uniquement avec des abouts de morceaux d'un ruban adhésif (2) double face, formant la couche adhésive (3).

4. Procédé selon l'une quelconque des revendications 1 à 3, **caractérisé en ce que** le ruban de recouvrement (4) est détaché en un site de détachement (11) continu dans la direction longitudinale de la bande continue et est réassemblé avec la couche adhésive (3) en un site d'assemblage (12) à une distance (L) par rapport au site de détachement (11), la section à chaque fois détachée du ruban de recouvrement (4) étant supérieure à la distance (L).

5. Procédé selon l'une quelconque des revendications 1 à 4, **caractérisé en ce que** le matériau en bande continue (20) est déplacé par rapport à un dispositif de décalage stationnaire (17) dans la direction longitudinale de la bande continue (16).

6. Procédé selon l'une quelconque des revendications 1 à 5, **caractérisé en ce que** le ruban de recouvrement (4) est détaché de la couche adhésive (3) par un rouleau de guidage (13) en un site de détachement (11) et appliqué sur ladite couche adhésive par un rouleau de compression (14) en un site d'assemblage (12).

7. Procédé selon l'une quelconque des revendications 1 à 6, **caractérisé en ce qu'**une section du ruban de recouvrement (4) détachée en continu de la couche adhésive est guidée sur au moins un rouleau de déviation (15) ou dispositif de glissement agencé à une certaine distance par rapport à la couche adhésive (3).

8. Procédé selon l'une quelconque des revendications 1 à 7, **caractérisé en ce que**, pour la réalisation, le matériau en bande continue est déroulé d'une bobine (21) et le matériau en bande continue (20') réalisé est directement introduit dans un procédé de transformation.

9. Procédé selon l'une quelconque des revendications 1 à 8, **caractérisé en ce qu'**une augmentation de longueur du ruban de recouvrement (4) se produisant lors du détachement du ruban de recouvrement (4) est compensée par réassemblage avec la couche adhésive (3) dans un état refoulé du ruban de recouvrement ou annulée par traitement thermique du ruban de recouvrement allongé avant le réassemblage avec la couche adhésive (3).

10. Procédé selon la revendication 9, **caractérisé en ce qu'**un traitement thermique du ruban de recouvrement (4) allongé est effectué à l'aide d'un jet d'air chaud.

11. Matériau en bande continue pour la transformation en joints d'étanchéité et/ou en listeaux de protection de bord sur des carrosseries de véhicule, le matériau en bande continue essentiellement constitué de matériau élastomère présentant un ruban de recouvrement (4) s'étendant dans sa longueur dans la direction longitudinale de la bande continue pour la protection d'une couche adhésive (3), lequel ruban de recouvrement est constitué de morceaux assemblés les uns aux autres au niveau des abouts, **caractérisé en ce que** les abouts des morceaux du ruban de recouvrement (4) sont disposés de manière décalée par rapport à des abouts de morceaux assemblés les uns aux autres du reste du matériau en bande continue.

12. Matériau en bande continue selon la revendication 11, **caractérisé en ce que** les morceaux du ruban de recouvrement (4) sont assemblés via des pattes d'assemblage (9).

13. Matériau en bande continue selon la revendication 11 ou 12, **caractérisé en ce que** la couche adhésive (3) est l'une des deux faces adhésives d'un ruban adhésif (2) double face.

14. Matériau en bande continue selon l'une quelconque des revendications 11 à 13, **caractérisé en ce que** le ruban de recouvrement (4) est réassemblé avec la couche adhésive (3) de manière refoulée ou de manière rétractée après l'allongement, lequel ruban est le cas échéant refoulé et/ou rétracté par zones.
